(19)

Europäisches Patentamt

European Patent Office

Office européen des brevets

(11) **EP 2 140 642 B1**

(12) **EUROPEAN PATENT SPECIFICATION**

(45) Date of publication and mention
of the grant of the patent:
**20.07.2011 Bulletin 2011/29**

(21) Application number: **08732579.1**

(22) Date of filing: **20.03.2008**

(51) Int Cl.:
*H04L 25/06* (2006.01)          *H04L 27/26* (2006.01)
*H04L 1/00* (2006.01)

(86) International application number:
**PCT/US2008/057674**

(87) International publication number:
**WO 2008/121575 (09.10.2008 Gazette 2008/41)**

(54) **METHOD AND APPARATUS FOR MITIGATING INTERFERENCE IN MULTICARRIER MODULATION SYSTEMS**

VERFAHREN UND VORRICHTUNG ZUR ABSCHWÄCHUNG DER INTERFERENZ IN MEHRTRÄGER-MODULATIONSSYSTEMEN

PROCÉDÉ ET DISPOSITIF POUR ATTÉNUER UNE INTERFÉRENCE DANS DES SYSTÈMES DE MODULATION MULTIPORTEUSE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.03.2007   US 692305**

(43) Date of publication of application:
**06.01.2010   Bulletin 2010/01**

(73) Proprietor: **Motorola Solutions, Inc.
Schaumburg IL 60196 (US)**

(72) Inventor: **DOBERSTEIN, Kevin, G.
Elmhurst, Illinois 60126 (US)**

(74) Representative: **McLeish, Nicholas Alistair Maxwell
Boult Wade Tennant
Verulam Gardens
70 Gray's Inn Road
London WC1X 8BT (GB)**

(56) References cited:
**US-A1- 2005 278 609     US-A1- 2006 034 244**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The technical field relates generally to communication systems and more particularly, to a method and apparatus for mitigating interference in multicarrier modulation systems.

BACKGROUND

Multicarrier modulation (MCM) systems used to transmit signals using multiple subcarriers over a channel, like ones utilizing Orthogonal Frequency Division Multiplexing (OFDM), enable efficient bandwidth utilization and better resistance to intersymbol interference, wherein the intersymbol interference is caused due to spreading of signals and high rate of symbol transmission. In multicarrier modulation systems, a digital signal is used to carry information from a first location to a second location across a medium of transmission, which is also referred to herein as a Radio Frequency (RF) channel that is comprised of a specific radio frequency or a band of frequencies. Examples of information include, but are not limited to, digitized text, digitized video and digitized audio. A transmitter located at a first location transmits the digital signal and a receiver located at a second location receives the transmitted digital signal.

In MCM systems, a digital signal is subdivided into multiple bit streams, and each bit stream is encoded into data symbols. Examples of encoded data symbols include, but are not limited to, Binary Phase-Shift Keying (BPSK) symbols, 16 Quadrature Amplitude Modulation (QAM) symbols, 64 QAM symbols and Quadrature Phase-Shift Keying (QPSK) symbols. Each bit stream encoded into data symbols forms a symbol stream. Each symbol stream is modulated with a subcarrier before transmission. Moreover, one or more pilot symbols are typically inserted into each of the symbol streams to enable coherent reception. These pilot symbols can also be used to assess the quality of the digital signal received at the receiver.

For transmission of a composite MCM digital signal, a channel bandwidth for the RF channel is subdivided into subcarriers usually of equal bandwidth. The subcarriers are modulated with the symbol streams and are combined into a composite digital signal, and the composite digital signal is transmitted from the first location to the second location. At the second location, the receiver demodulates the composite digital signal and detects individual subcarriers. The individual subcarriers are processed and the information is recovered from the digital signal.

Usually, the quality of a composite digital signal is degraded by noise present across the RF channel. Apart from the degradation suffered due to noise present across the RF channel, the received composite digital signal is also susceptible to interference from either transmitters transmitting on the same frequency as the desired signal but from other physical locations or from transmitters transmitting on channels that are adjacent in frequency to the desired signal, over which other digital signals arc sent.

Adjacent channel interference (ACI) is a characteristic of Frequency Division Multiplex (FDM) systems, which include MCM systems. ACI is generally caused due to non-idcalistic nature of filters, wherein the non-ideal filters in a transmitter are unable to remove all of the emissions outside of their desired channel, causing some undesired energy to be present in the receiver of an adjacent channel. Further, in MCM systems outer subcarriers present in a channel are more susceptible to the interference from signals present in adjacent channels (as compared to inner subcarriers present in the channel) since they are closer in frequency to the interfering source. In scenarios where co-channel interference is present, if the interferer is of a bandwidth less than the bandwidth of the desired signal, then the center subcarriers are typically more susceptible to the interfering source.

One conventional method for mitigating co-channel or adjacent interference is by using interleaving to spread errors clustered within particular subcarriers throughout a coded block. Interleaving is a process wherein the order of transmission of the data within a digital signal is modified such that if a cluster of errors are caused by the channel, they arc distributed evenly throughout a coded block when the receiver re-orders the data prior to performing forward error correction. Another conventional method for mitigating adjacent channel interference uses a more tolerant signal constellation type in the outer subcarriers, such as QPSK to mitigate the interference caused by the signal on the adjacent channel. Accordingly, since this modulation is more tolerant to the interference, the overall performance is improved.

Interference can cause errors in the decoding of the composite digital signal. In some receivers, decoding of the composite digital signal is performed by Forward Error Correction (FEC) decoders. Modem FEC decoders use soft decision inputs to improve performance, wherein the soft decision inputs provide the decoder with additional information that can be used in the decoding process. One such soft decision input based on maximum a posteriori (MAP) detection is called a log-likelihood ratio (LLR). By way of example, for a Binary Phase Shift Keying (BPSK) modulation with transmitted symbols from the alphabet $t \in \{-1,+1\}$, and received symbol $r$, the LLR, $\Gamma$, is defined as the natural logarithm of the ratio of the a posteriori probabilities of the possible symbol hypothesis $P(t=+1|r)$ and $P(t=-1|r)$. Here the assumption is that the noise present in the composite signal is additive white Gaussian noise with variance, $\sigma^2$, and that each symbol is equally likely:

$$\Gamma = \log_e\left[\frac{P(t=+1\,|\,r)}{P(t=-1\,|\,r)}\right] = \log_e\left[\frac{\frac{1}{\sigma\sqrt{2\pi}}e^{\left[-\frac{1}{2}\left(\frac{r-1}{\sigma}\right)^2\right]}}{\frac{1}{\sigma\sqrt{2\pi}}e^{\left[-\frac{1}{2}\left(\frac{r+1}{\sigma}\right)^2\right]}}\right] = \frac{2r}{\sigma^2} \qquad (1)$$

Similarly to what can be seen by reference to equation (1), it can be shown in general that for all constellation types, the LLR value is inversely related to the noise of the composite signal. Conventionally, the LLR is calculated by providing a noise estimate which is achieved by taking the average value of the entire composite digital signal. However, average value of the noise of the entire composite digital signal can lead to inaccurate decision by the FEC decoder when attempting to mitigate the effect of interference due to adjacent channels and/or co-channel interference sources.

Thus, there exists a need for a method and apparatus for mitigating interference in MCM systems, which addresses at least some of the shortcomings of past and present interference mitigation techniques.

Patent publication number US 2005/0278609 describes a soft-decision decoding operation of received bits performed with log-likelihood ratios based on noise variance over the whole symbol frequency-spectrum.

BRIEF DESCRIPTION OF THE FIGURES

The accompanying figures, where like reference numerals refer to identical or functionally similar elements throughout the separate views, which together with the detailed description below are incorporated in and form part of the specification and serve to further illustrate various embodiments of concepts that include the claimed invention, and to explain various principles and advantages of those embodiments.

FIG. 1 illustrates a block diagram of a communication system, wherein some embodiments are implemented in a receiver of the system.

FIG. 2 illustrates a block diagram of a communication system, wherein some embodiments are implemented in a receiver of the system.

FIG. 3 illustrates a symbol diagram of a prior art composite signal transmitted from a transmitter of the system shown in FIG. 1.

FIG. 4 is a flow diagram illustrating a method for mitigating interference in MCM systems, in accordance with some embodiments.

FIG. 5 illustrates a block diagram of a symbol demodulator, in accordance with some embodiments.

FIG. 6 illustrates a symbol diagram of a composite signal received and processed in accordance with some embodiments.

Skilled artisans will appreciate that elements in the figures are illustrated for simplicity and clarity and have not necessarily been drawn to scale. For example, the dimensions of some of the elements in the figures may be exaggerated relative to other elements to help improve understanding of various embodiments. In addition, the description and drawings do not necessarily require the order illustrated. Apparatus and method components have been represented where appropriate by conventional symbols in the drawings, showing only those specific details that are pertinent to understanding the various embodiments so as not to obscure the disclosure with details that will be readily apparent to those of ordinary skill in the art having the benefit of the description herein. Thus, it will be appreciated that for simplicity and clarity of illustration, common and well-understood elements that are useful or necessary in a commercially feasible embodiment may not be depicted in order to facilitate a less obstructed view of these various embodiments.

DETAILED DESCRIPTION

Generally speaking, pursuant to the various embodiments is a method and apparatus for mitigating interference in a MCM system. The method includes receiving an encoded signal over multiple subcarriers at different frequencies. The signal includes a plurality of pilot symbols and data symbols modulated onto the subcarriers using a suitable modulation technique. Further, the method includes grouping the subcarriers into multiple sets of subcarriers based on their frequencies, wherein each set includes one or more subcarriers. The method also includes estimating, for each set of subcarriers, a noise value associated with at least a portion of the pilot symbols received over subcarriers included in the set. The estimated noise power value (herein referred to as simply the estimated noise value) comprises both additive white Gaussian noise and interference to which a composite signal is subjected. Furthermore, the method includes generating a decoded signal comprising a plurality of decoded data bits, using the estimated noise values.

The apparatus includes receiver apparatus and a processing device. The receiver receives an encoded signal over multiple subcarriers at different frequencies, wherein the signal includes a plurality of pilot symbols and data symbols modulated onto the subcarriers using a modulation technique. The processing device: groups the subcarriers into multiple sets of subcarriers based on their frequencies; estimates, for each set of subcarriers, a noise value associated with at least a portion of the pilot symbols received over subcarriers included in the set; and generates a decoded signal comprising a plurality of decoded data bits using the estimated noise values.

The noise estimate value can be calculated on a subcarrier by subcarrier basis and/or for a small group of subcarriers. The noise estimate value is used to calculate a LLR value, which can provide additional information to FEC decoders to improve coding performance. In accordance with embodiments, an FEC decoder is provided with more detailed knowledge of where the interference occurs via the magnitude of the noise estimate per subcarrier and/or groups of subcarriers. The additional information provided to the FEC gives rise to a better probability of correcting the received signal. Those skilled in the art will realize that the above recognized advantages and other advantages described herein are merely illustrative and are not meant to be a complete rendering of all of the advantages of the various embodiments.

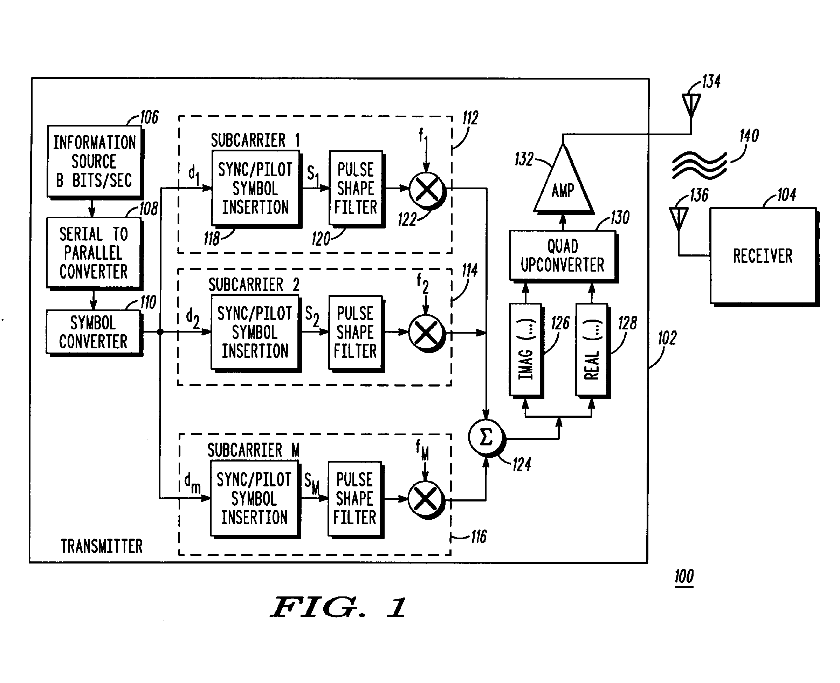

Referring now to the drawings, and in particular FIG. 1, for purposes of providing an illustrative but non exhaustive example to facilitate this description, a specific operational paradigm, using a multicarrier modulation system is shown and indicated generally as multicarrier modulation system 100. Those skilled in the art will, however, recognize and appreciate that the specifics of this illustrative example are not specifics of the invention itself and that the teachings set forth herein are applicable in a variety of alternative settings. For example, since the teachings described do not depend on any particular platform, they can be applied to any type of MCM system, with one or more subcarriers modulated with, but not limited to, BPSK, QPSK, Minimum-Shift Keying (MSK), Offset Quadrature Phase-Shift Keying (OQPSK), and Quadrature Amplitude Modulation (QAM) although a 16-QAM implementation is described herein. As such, other alternative implementations of using different types of MCM systems are contemplated and are within the scope of the various teachings described.

Referring now to the illustrative MCM system 100, the MCM system 100 includes a transmitter 102 and a receiver 104. The transmitter 102 and the receiver 104 can be part of wireless communication devices, examples of which include, but are not limited to, mobile phones, laptops, and the like. These wireless communication devices can communicate with each other through MCM systems, examples of which include High Performance Data (HPD), TIA902.BAAB High Speed Data/Scalable Adaptive Modulation (HSD/SAM), TETRA 2, and other systems employing OFDM concepts.

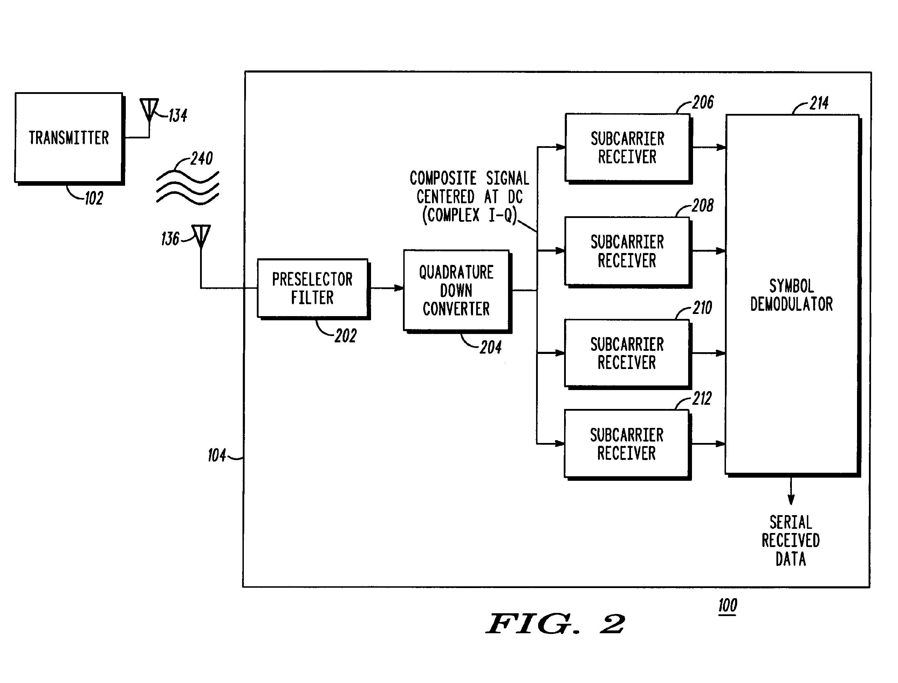

Transmitter 102 includes an information source 106, a serial-to-parallel converter 108, a symbol converter 110, and processing blocks 112, 114 and 116. The processing blocks 112, 114 and 116 are similar in functionality. By way of example, processing block 112 includes a sync/pilot symbol insertion block 118, a pulse shape filter block 120 and a complex mixer block 122. Furthermore, the transmitter 102 includes a summation block 124, an imaginary-part block 126, and a real-part block 128. Elements 112, 114, 116, 124, 126 and 128 are functional blocks that can be implemented using any suitable processing device such as one or more of the processing devices described later. Finally, transmitter 102 includes a quad upconverter 130, an amplifier block 132 and an antenna 134 collectively referred to herein as transmitter apparatus, which upconverts a signal from baseband to radio carrier frequency for transmission over the RF channel. The receiver 104 includes an antenna 136 and additional elements described by reference to FIG. 2.

The MCM system 100 is used to transmit digital signals across a RF channel. In the RF channel, the digital signal is sent through multiple subcarriers. Each subcarrier is modulated with a particular offset carrier frequency. In operation, the information source 106 sends information in the form of a bit stream to the serial-to-parallel converter 108 at a rate of 'B' bits per second, for instance. Examples of information include, but are not limited to, digitized text, digitized video and digitized audio. The serial-to-parallel converter 108 converts the digital information into 'M' number of different bit streams. Further, each of the 'M' bit streams corresponds to a particular subcarrier. Therefore, there are 'M' subcarriers allocated for the 'M' bit streams. Further, the serial-to-parallel converter 108 sends each bit stream to the symbol converter 110, which converts each bit stream into a stream of QAM symbols. In this embodiment, the symbol converter 110 converts the digital information to 16 QAM symbols. In 16 QAM symbols, each QAM symbol can represent a four bit word. Further, each QAM symbol can be represented in a Cartesian coordinate system wherein a real part of a QAM symbol can be plotted along one axis and an imaginary part of the QAM symbol can be plotted along another axis.

The symbol converter 110 sends the QAM symbols corresponding to different bit streams (e.g., $d_1$, $d_2$ and $d_M$, respectively) to the processing blocks 112, 114 and 116. Each processing block corresponds to a particular subcarrier, wherein only three such processing blocks are shown for clarity of illustration. Moreover, since the processing blocks 112, 114 and 116 are similar in functionality, the functionality of each processing block will be explained in conjunction with the processing block 112. The processing block 112 corresponds to a subcarrier 1. In the processing block 112, the sync/pilot symbol insertion block 118 inserts synchronization ("sync") and pilot symbols into the stream of QAM symbols to form a composite symbol stream. The synchronization symbols are used to enable the coherent reception of transmitted signals by receiver 104. Pilot symbols are used by the receiver 104 to estimate effects of the channel on the received signal as well as assess the quality of the signal received at the receiver 104 as compared to the signal transmitted from the transmitter 102.

The sync/pilot symbol insertion block 118 sends the composite symbol stream (e.g., respectively, $S_1$, $S_2$ and $S_M$ for processing blocks 112, 114 and 116) to the pulse shape filter block 120, which restricts the spectrum of a subcarrier so that interference between adjacent subcarriers is minimized. The complex mixer block 122 modulates the composite symbol stream with a subcarrier signal with a particular offset frequency (e.g., respectively, $f_1$, $f_2$ and $f_M$ for processing blocks 112, 114 and 116). Similarly, a bit stream is processed by the processing blocks 114 and 116 to generate corresponding composite symbol streams.

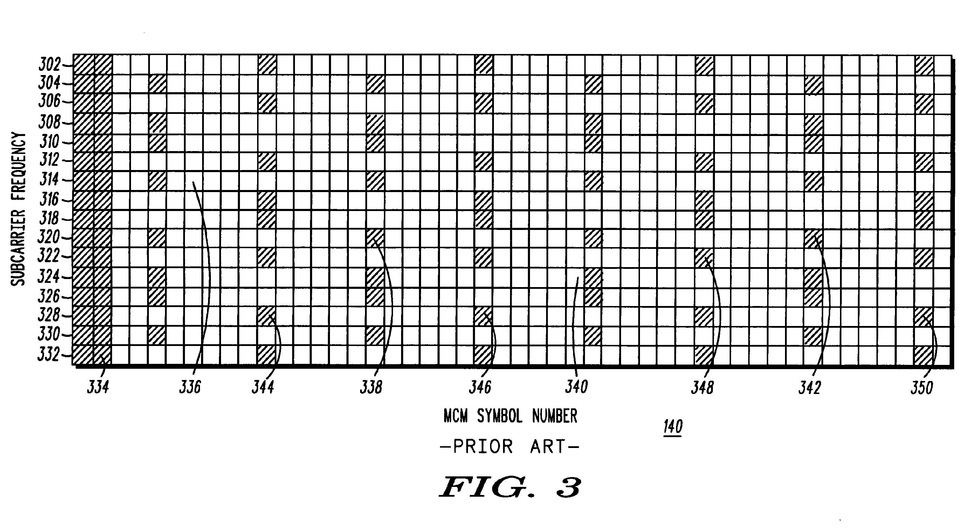

A composite signal is generated by the summation block 124 adding up all the composite symbol streams from the processing blocks 112, 114 and 116. The composite signal is separated into real and imaginary components by using the imaginary-part block 126 and the real-part block 128, respectively, and forwarded to the quad upconverter block 130. The quad upconverter block 130 mixes the real and imaginary components to radio carrier frequency and combines them into a composite signal. Further, the composite signal from the quad upconverter 130 is sent to an amplifier 132. The amplifier 132 amplifies the power of the composite signal before transmission. Further, the composite signal 140 is transmitted to the receiver 104 across an RF channel through the antenna 134. An illustrative composite signal 140 is described in detail below by reference to FIG. 3. The antenna 136 at the receiver 104 receives the transmitted composite signal and processes the composite signal, in accordance with the teachings herein, to extract data bit streams from the composite signal.

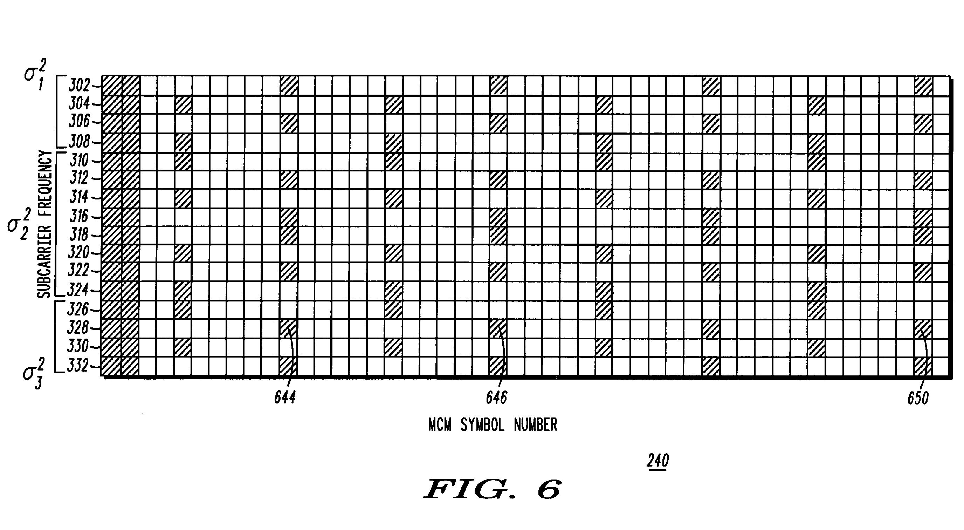

Referring to FIG. 2, system 100 is shown with an exploded view of an illustrative structure of receiver 104, in accordance with some embodiments. As stated above, the antenna 136 of the receiver 104 receives the composite signal transmitted by the transmitter 102, with the transmitted composite signal being labeled as 140 in FIG. 1 and the received composite signal being labeled 240 in FIG. 2. An illustrative received composite signal 240 is described in detail below by reference to FIG. 6. It should be noted that both signals (i.e., 140 and 240) identify the composite signal transmitted from transmitter 102, but different reference numbers are used to indicate subjection of the signal to noise and interference as it travels across the RF channel from the transmitter 102 to the receiver 104.

The receiver 104 further includes a preselector filter 202 and a quadrature down-converter 204 (collectively referred to herein receiver apparatus, which downconvcrts the composite signal 240 from radio carrier frequency to baseband), subcarrier receivers 206, 208, 210 and 212, and a symbol demodulator 214. Elements 206, 208, 210, 212 and 214 are functional blocks that can be implemented using any suitable processing devices such as one or more of the processing devices described later.

In operation, after receiving the composite signal 240 at the antenna 136, the composite signal is sent to the preselector filter 202. The preselector filter 202 is a tunable filter, which can be tuned to receive a composite signal of a particular frequency. Further, the preselector filer 202 sends the composite signal to the quadrature down-converter 204. The quadrature down-converter 204 converts the composite signal, which is at the radio carrier frequency level to a complex composite baseband signal centered at 0Hz. After conversion to baseband level, the composite signal is sent to the subcarrier receivers 206, 208, 210 and 212. The subcarrier receivers 206, 208, 210 and 212 separate the downconverted composite signal into different subcarriers based on their frequency offset. The subcarrier receivers 206, 208. 210 and 212 are similar in functionality. Each subcarrier receiver usually recovers a symbol stream from a different subcarrier, wherein only four such subcarriers receivers are shown for clarity of illustration. The composite symbol stream from the subcarrier receivers 206, 208, 210 and 212 are sent to the symbol demodulator 214. The symbol demodulator 214 processes the composite symbol steam, in accordance with the teachings herein, to recover the bit stream transmitted by the transmitter 102.

Turning now to FIG. 3, a symbol diagram of the transmitted composite signal 140 is shown. The composite signal 140 includes sixteen subcarriers 302, 304, 306, 308, 310, 312, 314, 316, 318, 320, 322, 324, 326, 328, 330 and 332. Each subcarrier can include data symbols, pilot symbols and sync symbols, with the data symbols shown as boxes without hash marks, and the pilot and sync symbols shown as boxes that include, hash marks. Sync symbols are used to enable the receiver 104 to coordinate the reception of transmitted signals in a correct order with time synchronization. Pilot symbols are used to both estimate the effects of the channel on the received composite signal and to estimate the noise level in the received composite signal. By way of example, the subcarrier 332 includes a sync symbol 334. Subcarrier 328 includes pilot symbols 344, 346 and 350. Subcarrier 324 includes a data symbol 340. Subcarrier 322 includes a pilot symbol 348. Subcarrier 320 includes pilot symbols 338 and 342, and subcarrier 314 includes a data symbol 336.

Typically, in an FDM system where multiple subcarriers are used (as in MCM systems), outer subcarrier, for example, 302, 304, 330 and 332 suffer more interference from adjacent channels due to their proximity to outer subcarriers of these adjacent channels, as compared to inner subcarriers like 314, 316 and 318. The interference in the RF channels may lead to an erroneous reception. In order to facilitate a proper reception of the composite signal and, thereby, mitigate the effects of various interference sources (and other noise) on the composite signal during transmission, the receiver estimates the noise level to use in its interference/noise mitigation techniques. The noise level in the received composite signal can be estimated, for example, by first using surrounding pilot symbols to estimate the value of a target pilot symbol, using a pilot interpolation process. Then, by comparing the estimated pilot symbol received at the receiver with the known transmitted pilot symbol an estimate of the noise present at that symbol instant in the channel can be obtained. This process can be repeated for additional pilots and the results averaged together to produce composite noise estimates, such as ones in accordance with the teachings herein.

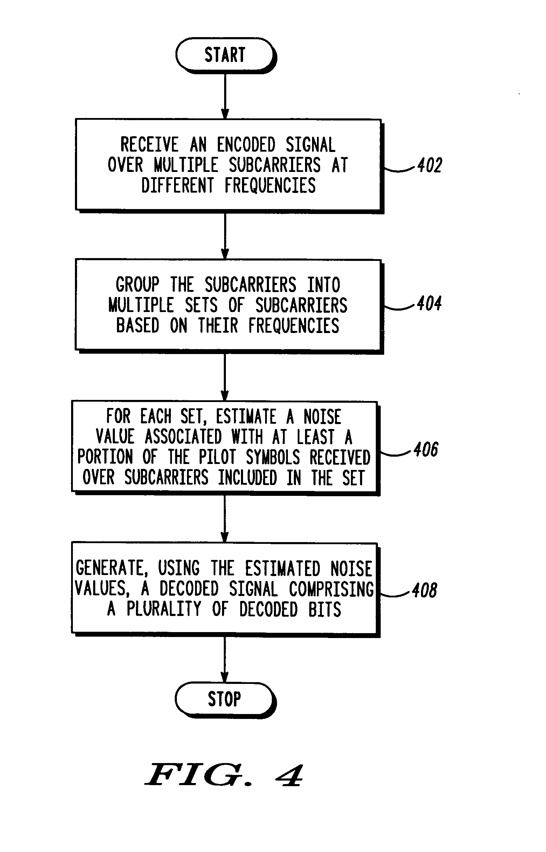

Turning now to FIG. 4, a flow diagram illustrating a method for mitigating interference in MCM systems is shown, according to some embodiments. To describe the method, reference will be made to FIG. 2, FIG. 5 and FIG. 6, although it is understood that the method can also be implemented with reference to any other suitable embodiment. Moreover, the method can contain a different numbers of steps than is shown in FIG. 4.

At 402, an encoded signal is received over multiple subcarriers at different frequencies. The signal includes a plurality of pilot symbols and data symbols modulated onto the subcarriers using a modulation technique. The signal can be, for example, the composite signal 240 received by the receiver 104. At 404, the subcarriers are grouped into multiple sets of subcarriers based on their frequencies. Each set of subcarriers includes one or more subcarriers, wherein the subcarriers grouped together in a set usually, but not necessarily, have adjacent subcarrier frequencies.

At 406, a noise value associated with at least a portion of the pilot symbols received over subcarriers included in each set is estimated. If the received pilot symbol is modeled as:

$$v_i = p_i h + n \qquad (2)$$

Where $v_i$ is the received pilot symbol *number i, $p_i$* is the magnitude of the transmitted pilot symbol, $h_i$ is a channel response at pilot location *i*, and *n* represents the noise and interference then the noise estimate value can be estimated using the equation:

$$\sigma^2 = \alpha \frac{1}{N} \sum_{i=0}^{N-1} \left| v_i - p_i \hat{h}_i \right|^2 , \qquad (3)$$

wherein $\sigma^2$ is the estimated noise power value also referred to herein as simply the noise value (wherein it should be understood that the noise power value includes contributions from both additive white Gaussian noise and interference), $p_i$ is the magnitude of the transmitted pilot symbol number *i*, $\hat{h}_i$ is an estimate of the channel response at pilot symbol location *i*, $\alpha$ is a constant calculated from the pilot interpolation design parameters, and N is the total number of pilot symbols used in the average. Here, $v_i$ refers to the portion of the pilot symbols received over subcarriers included in each set used for noise estimation and $\hat{h}_i$ refers to the channel estimate provided by pilot interpolation at the pilot symbol locations.

Turning momentarily to FIG. 6, a slot diagram of the received signal 240 is shown. An illustrative grouping of the sixteen subcarriers includes three sets (or groups in this instance) of subcarriers. A first group includes subcarriers 302, 304, 306, and 308 from which a first noise estimate value, $\sigma^2_1$, is determined using at least some of the pilot symbols in these four subcarriers. Likewise, a second noise estimate value, $\sigma^2_2$. is determined using pilot symbols from a second group of subcarriers comprising subcarriers 310, 312, 314, 316, 318, 320, 322, and 324, and a third noise estimate value, $\sigma^2_3$, is determined using pilot symbols from a third group of subcarriers comprising subcarriers 326, 328, 330 and 332. In this example, outer subcarriers are grouped together and noise estimates, e.g., $\sigma^2_1$ and $\sigma^2_3$, corresponding to the outer subcarriers are determined separately from a noise estimate e.g., $\sigma^2_3$, corresponding to inner subcarriers, since it is expected that certain interference may be greater in the outer subcarriers. Any other suitable parameters may be used to determine how to group the subcarriers and to determine the number of subcarriers in each set. However, it is usually desirable to make the number of subcarriers in a group as small as possible, while still enabling a large enough number of samples to produce a useful average. In addition, embodiments can be envisioned where the groupings can remain static or can be adjusted dynamically as the signal is received.

At 408, a decoded signal comprising a plurality of decoded data bits is generated using a suitable equation (which is determined based on the modulation technique used) by applying the multiple estimated noise values calculated using equation (3). More particularly, a plurality of received data bits is generated from received data symbols and for each received data bit, an estimate of the bit is made and a confidence measure is determined associated with the estimated bit value. The confidence measure is a function of the estimated noise value that corresponds to the set of subcarriers that includes the subcarrier over which the data bit was received.

Where the receiver includes an FEC decoder, the plurality of received data bits is decoded using an associated confidence measure that comprises a log-likelihood ratio, to generate the decoded signal. The LLR indicates a measure of certainty that the bit value estimated for the received data bit is an actual bit value of a corresponding transmitted data bit. It can be seen from equation (1) that the LLR is inversely proportional to the noise estimate $\sigma^2$ and for each received data bit a noise estimate and associated LLR is determined, which holds true for other modulation techniques including 16QAM as illustrated through the derivations below. Moreover, the noise estimate measure is based on averaging the noise values that corresponds to the set of subcarriers that includes the subcarrier over which the data bit is received, and the LLR is estimated using an equation based on the modulation technique.

By way of example, for 16QAM modulation, a pair of symbols is transmitted during each symbol instant, one on the in-phase (I) portion of the carrier and one on the quadrature (Q) portion of the carrier. The symbols are chosen from the alphabet $t \in \{+/-1,+/-3\}$. Each of these symbols represents two bits of information. For example, let a bit pattern of $b_0b_1$=%00 correspond to a symbol +3, $b_0b_1$=%01 correspond to a symbol of +1, $b_0b_1$=%10 correspond to a symbol of -3 and $b_0b_1$=%11 correspond to a symbol -1. However, it should be noted that other bit to symbol mappings are equally valid.

Note that both the transmitted symbol $t$ and the received symbol $r$ can be represented as a complex number where the in-phase portion of the signal is represented as the real portion of the complex number and the quadrature portion of the signal is represented as the imaginary portion of the complex number. Given these assumptions, the log-likelihood ratio (LLR), $\Gamma$, is defined in terms of the received symbol $r$ and the transmitted symbol $t$ as the natural logarithm of the ratio of the a posteriori probabilities of the possible symbol hypothesis $P(t = +1 \mid r)$, $P(t = -1|r)$, $P(t = +3|r)$, and $P(t = -3|r)$ for each bit within the in-phase and quadrature portions of the signal:

$$\Gamma_{Ib_0} = \ln\left[\frac{P(real(t) = +1 \mid real(r)) + P(real(t) = +3 \mid real(r))}{P(real(t) = -1 \mid real(r)) + P(real(t) = -3 \mid real(r))}\right]$$

$$\Gamma_{Ib_1} = \ln\left[\frac{P(real(t) = +3 \mid real(r)) + P(real(t) = -3 \mid real(r))}{P(real(t) = +1 \mid real(r)) + P(real(t) = -1 \mid real(r))}\right]$$

$$\Gamma_{Qb_0} = \ln\left[\frac{P(imag(t) = +1 \mid imag(r)) + P(imag(t) = +3 \mid imag(r))}{P(imag(t) = -1 \mid imag(r)) + P(imag(t) = -3 \mid imag(r))}\right]$$

$$\Gamma_{Qb_1} = \ln\left[\frac{P(imag(t) = +3 \mid imag(r)) + P(imag(t) = -3 \mid imag(r))}{P(imag(t) = +1 \mid imag(r)) + P(imag(t) = -1 \mid imag(r))}\right],$$

where $\Gamma_{Ib_0}$ is the LLR corresponding to bit $b_0$ on the in-phase portion of the received signal, $\Gamma_{Ib_1}$ is the LLR corresponding to bit $b_1$ on the in-phase portion of the received signal, $\Gamma_{Qb_0}$ is the LLR corresponding to bit $b_0$ on the quadrature portion of the received signal, $T_{Qb1}$ is the LLR corresponding to bit $b_1$ also on the quadrature portion of the received signal. Additionally, the operator "real()" extracts the real portion of the complex received symbol and the "imag()" operator extracts the imaginary portion of the complex received symbol.

Now utilizing the mixed form of Baye's theorem that expresses the a posteriori probabilities in terms of the conditional probability density function, p(r|t=$t_i$), and the probability that a given symbol was transmitted P(t=$t_i$): P[t=$t_i$|r] =p(r|t=$t_i$)*P(t=$t_i$). Moreover, assuming that each symbol is equally likely, that is, P(t=+1)=P(t=-1)=P(t=-1)=P(t=-3) we can re-write the LLRs as follows:

$$\Gamma_{Ib_0} = \ln\left[\frac{p(real(r) \mid real(t) = +1) + p(real(r) \mid real(t) = +3)}{p(real(r) \mid real(t) = -1) + p(real(r) \mid real(t) = -3)}\right]$$

$$\Gamma_{Ib_1} = \ln\left[\frac{p(real(r)\,|\,real(t)=+3)+p(real(r)\,|\,real(t)=-3)}{p(real(r)\,|\,real(t)=+1)+p(real(r)\,|\,real(t)=-1)}\right]$$

$$\Gamma_{Qb_0} = \ln\left[\frac{p(imag(r)\,|\,imag(t)=+1)+p(imag(r)\,|\,imag(t)=+3)}{p(imag(r)\,|\,imag(t)=-1)+p(imag(r)\,|\,imag(t)=-3)}\right]$$

$$\Gamma_{Qb_1} = \ln\left[\frac{p(imag(r)\,|\,imag(t)=+3)+p(imag(r)\,|\,imag(t)=-3)}{p(imag(r)\,|\,imag(t)=+1)+p(imag(r)\,|\,imag(t)=-1)}\right].$$

A further assumption in this derivation is that the noise present in the composite signal includes additive white Gaussian noise and interference with variance $\sigma^2$, which results in the conditional probability density function $p(r|t=t_i)$ also being Gaussian with the same variance. With this assumption, the LLRs can be written as follows:

$$\Gamma_{Ib_0} = \ln\left[\frac{e^{-\frac{(real(r)-1)^2}{2\sigma^2}}+e^{-\frac{(real(r)-3)^2}{2\sigma^2}}}{e^{-\frac{(real(r)+1)^2}{2\sigma^2}}+e^{-\frac{(real(r)+3)^2}{2\sigma^2}}}\right] = \ln\left[e^{-\frac{(real(r)-1)^2}{2\sigma^2}}+e^{-\frac{(real(r)-3)^2}{2\sigma^2}}\right] - \ln\left[e^{-\frac{(real(r)+1)^2}{2\sigma^2}}+e^{-\frac{(real(r)+3)^2}{2\sigma^2}}\right]$$

$$\Gamma_{Ib_1} = \ln\left[\frac{e^{-\frac{(real(r)+3)^2}{2\sigma^2}}+e^{-\frac{(real(r)-3)^2}{2\sigma^2}}}{e^{-\frac{(real(r)+1)^2}{2\sigma^2}}+e^{-\frac{(real(r)-1)^2}{2\sigma^2}}}\right] = \ln\left[e^{-\frac{(real(r)+3)^2}{2\sigma^2}}+e^{-\frac{(real(r)-3)^2}{2\sigma^2}}\right] - \ln\left[e^{-\frac{(real(r)+1)^2}{2\sigma^2}}+e^{-\frac{(real(r)-1)^2}{2\sigma^2}}\right]$$

$$\Gamma_{Qb_0} = \ln\left[\frac{e^{-\frac{(imag(r)-1)^2}{2\sigma^2}}+e^{-\frac{(imag(r)-3)^2}{2\sigma^2}}}{e^{-\frac{(imag(r)+1)^2}{2\sigma^2}}+e^{-\frac{(imag(r)+3)^2}{2\sigma^2}}}\right] = \ln\left[e^{-\frac{(imag(r)-1)^2}{2\sigma^2}}+e^{-\frac{(imag(r)-3)^2}{2\sigma^2}}\right] - \ln\left[e^{-\frac{(imag(r)+1)^2}{2\sigma^2}}+e^{-\frac{(imag(r)+3)^2}{2\sigma^2}}\right]$$

$$\Gamma_{Qb_1} = \ln\left[\frac{e^{-\frac{(imag(r)+3)^2}{2\sigma^2}}+e^{-\frac{(imag(r)-3)^2}{2\sigma^2}}}{e^{-\frac{(imag(r)+1)^2}{2\sigma^2}}+e^{-\frac{(imag(r)-1)^2}{2\sigma^2}}}\right] = \ln\left[e^{-\frac{(imag(r)+3)^2}{2\sigma^2}}+e^{-\frac{(imag(r)-3)^2}{2\sigma^2}}\right] - \ln\left[e^{-\frac{(imag(r)+1)^2}{2\sigma^2}}+e^{-\frac{(imag(r)-1)^2}{2\sigma^2}}\right]$$

Lastly, using the approximation $\ln(e^A+e^B)\approx\max(A,B)$, it can be shown that the LLRs can be simplified as follows:

$$\Gamma_{Ib_o} = \begin{cases} \dfrac{4}{\sigma^2}(real(r)+1) & real(r) \leq -2 \\[2mm] \dfrac{2*real(r)}{\sigma^2} & -2 < real(r) \leq 2 \\[2mm] \dfrac{4}{\sigma^2}(real(r)-1) & real(r) > 2 \end{cases}$$

$$\Gamma_{Ib_1} = \begin{cases} -\dfrac{2}{\sigma^2}(real(r)+2) & real(r) < 0 \\[2mm] \dfrac{2}{\sigma^2}(real(r)-2) & real(r) \geq 0 \end{cases}$$

$$\Gamma_{Qb_0} = \begin{cases} \dfrac{4}{\sigma^2}(imag(r)+1) & imag(r) \leq -2 \\[2mm] \dfrac{2*imag(r)}{\sigma^2} & -2 < imag(r) \leq 2 \\[2mm] \dfrac{4}{\sigma^2}(imag(r)-1) & imag(r) > 2 \end{cases}$$

$$\Gamma_{Qb_1} = \begin{cases} -\dfrac{2}{\sigma^2}(imag(r)+2) & imag(r) < 0 \\[2mm] \dfrac{2}{\sigma^2}(imag(r)-2) & imag(r) \geq 0 \end{cases}.$$

It can be seen through the above derivations for the 16 QAM modulation that the LLR is inversely proportional to the noise estimate value. Calculation of noise estimate values for the encoded signal can be done on a subcarrier by subcarrier basis or for a small group of subcarriers. For example, the noise estimate value of the subcarrier 328 can be calculated separately using the pilot symbols 644, 646, and 650. A bit received over subcarrier 328 is then estimated using an LLR value that is calculated using a noise value that is estimated only for subcarrier 328 or that is estimated for a group of subcarriers that includes subcarrier 328, e.g., the third group of subcarriers described above by reference to FIG. 6.

As mentioned previously, outer subcarriers, for example, 302, 304, 330 and 332 suffer more interference from adjacent channels due to their proximity to outer subcarriers of these adjacent channels, as compared to inner subcarriers like 314, 316 and 318. Consequently, outer subcarriers have a correspondingly higher noise estimate value as compared to inner subcarriers, which leads to lower LLR values for bits received over the outer subcarriers since the LLR value is inversely proportional to noise estimate value. The lower LLR values are thus advantageously applied to bits received over the outer subcarriers, in accordance to the teachings herein. Similarly, inner subcarriers 314, 316, 318 have correspondingly lower noise estimate values as compared to the outer subcarriers, which leads to higher LLR values being applied to bits received over the inner subcarriers. Thus, instead of using a single noise value to determine the corresponding LLR for each received bit (as is conventionally done), in accordance with the teachings herein separate noise values can be calculated for each subcarrier or for groups of subcarriers to enable a more accurate LLR to be generated for each received bit, which is based at least in part on the frequency of the subcarrier over which the bit was received and the estimated noise at that subcarrier or over a group of subcarriers that includes that subcarrier.

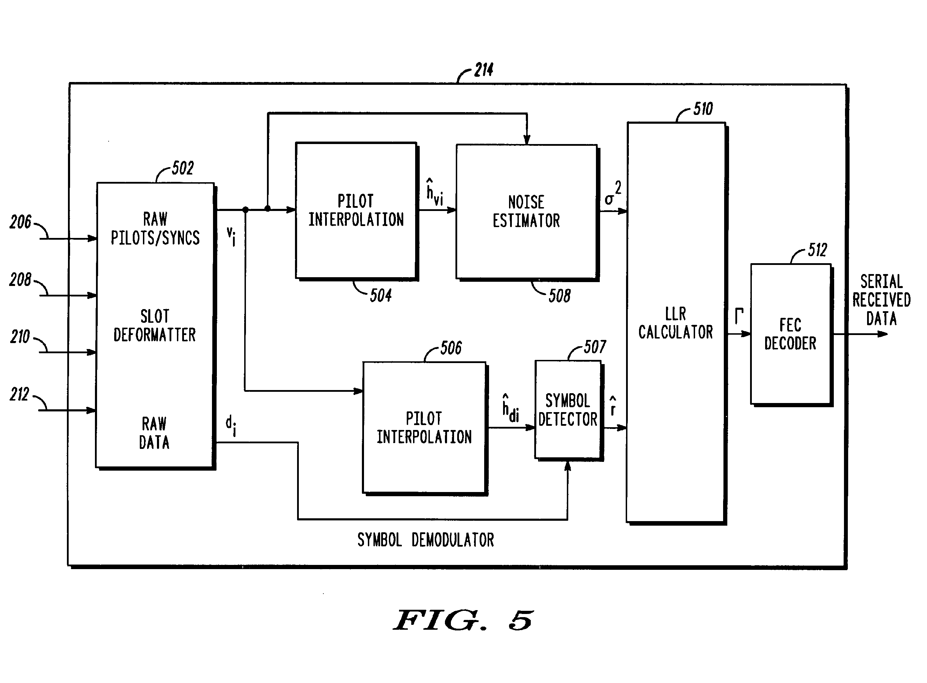

Referring to FIG. 5, a block diagram of a symbol demodulator 214 is shown, according to some embodiments. The symbol demodulator 214 can be, for example, a processing device in the receiver 104. The receiver 104 receives an encoded signal over multiple subcarriers at different frequencies. The signal includes a plurality of pilot symbols and data symbols modulated on the subcarriers using a modulation technique. Referring momentarily to FIG. 2, the output of the subcarrier receivers 206, 208, 210 and 212 is fed as input to the symbol demodulator 214. The symbol demodutator 214 includes a slot deformatter 502, pilot interpolation blocks 504 and 506. a symbol detector block 507, a noise estimator block 508, an LLR calculator block 510 and an FEC decoder block 512.

The slot deformatter 502 separates raw data signals $d_i$ and raw pilots/sync signals $v_i$ based on the slot mapping in FIG. 6. The raw data signals refer to the stream of QAM symbols as described by reference to FIG. 1. The raw pilots/sync signals refer to the sync symbols and pilot symbols inserted in the stream of QAM symbols as described by reference to FIG. 1. The raw pilots/sync signals $v_i$ are sent to pilot interpolation block 504 and noise estimator block 508. In pilot interpolation block 504, the raw pilots and sync signals $v_i$ are used along with the known transmitted pilot/sync symbol values to compute the channel response $\hat{h}_{vi}$ at each pilot symbol position. The noise estimator block 508 estimates a noise value associated with at least a portion of the pilot symbols received over subcarriers included in each set of subcarriers using the channel response estimates $\hat{h}_{vi}$ generated by the pilot interpolation block 504, and sends the noise estimate value to the LLR calculator 510. As stated earlier, the subcarriers are grouped into multiple set of subcarriers based on their frequencies, and the noise value can be calculated using equation (3).

The raw pilots and sync signals $v_i$ are further provided to pilot interpolator block 506 and are used along with the known transmitted pilot/sync symbol values to compute the channel response $\hat{h}_{vi}$ at each pilot symbol position, then these estimates are interpolated to provide similar estimates, $\hat{h}_{di}$, at each data symbol position. The estimate for the channel $\hat{h}_{di}$ at each data symbol instant is applied to the raw data signal $d_i$ in the symbol detector block 507 to compute the corrected estimate of the transmitted symbol at the receiver, $\hat{r}$. This received symbol estimate $\hat{r}$ is then sent to the LLR calculator 510. The LLR calculator 510 calculates the LLR value based on the outputs of the symbol detector block 507 and the noise estimate block 508. The LLR is calculated using equations based on the modulation technique used. The calculated LLR value is used for decoding the received bits in the Forward Error Correction (FEC) decoder 512. The FEC decoder 512 generates a decoded signal comprising a plurality of decoded data bits using the LLR values produced in the LLR Calculator 510.

As described above, various embodiments as described above provide a method and apparatus for mitigating interference in MCM systems. The calculation of noise estimate values is done on a subcarrier by subcarrier basis or for a small group of subcarriers. The noise estimate values are used to calculate LLR values, which can provide additional information to FEC decoders to improve coding performance. Providing the FEC decoder with more detailed knowledge of where the interference occurs via calculating the noise estimate on a per subcarrier basis or for small groups of subcarriers, provides additional information to the FEC giving rise to a better probability of correcting the received signal.

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings. The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Moreover in this document, relational terms such as first and second, top and bottom, and the like may be used solely to distinguish one entity or action from another entity or action without necessarily requiring or implying any actual such relationship or order between such entities or actions. The terms "comprises," "comprising," "has", "having," "includes", "including," "contains", "containing" or any other variation thereof, are intended to cover a non-exclusive inclusion, such that a process, method, article, or apparatus that comprises, has, includes, contains a list of elements docs not include only those elements but may include other elements not expressly listed or inherent to such process, method, article, or apparatus. An element proceeded by "comprises ...a", "has ...a", "includes ...a", "contains ...a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially", "essentially", "approximately", "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "coupled" as used herein is defined as connected, although not necessarily directly and not necessarily mechanically. A device or structure that is "configured" in a certain way is configured in at least that way, but may also be configured in ways that are not listed.

It will be appreciated that some embodiments may be comprised of one or more generic or specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and apparatus for mitigating interference in a MCM system described herein. The non-processor circuits may include, but are not limited to, a radio receiver, a radio transmitter, signal drivers, clock circuits, power source circuits, and user input devices. As such, these functions may be interpreted as steps of a method to perform the mitigation of interference in a MCM system described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used. Both the state machine and ASIC are considered herein as a "processing device" for purposes of the foregoing discussion and claim language.

Moreover, an embodiment can be implemented as a computer-readable storage medium having computer-readable code stored thereon for programming a computer (e.g., comprising a processing device) to perform a method as described and claimed herein. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1.  A method comprising:

    receiving (402) an encoded signal over multiple subcarriers at different frequencies, the signal including a plurality of pilot symbols and data symbols modulated onto the subcarriers using a modulation technique; and
    **characterized by**
    grouping (404) the subcarriers into multiple sets of subcarriers based on their frequencies;
    for each set, estimating (406) a noise value associated with at least a portion of the pilot symbols received over subcarriers included in the set; and
    generating (408) using the estimated noise values, a decoded signal comprising a plurality of decoded data bits.

2.  The method as recited in Claim 1, wherein generating the decoded signal comprises:

    generating from the data symbols a plurality of received data bits and for each received data bit estimating a bit value and determining a confidence measure associated with the estimated bit value, wherein the confidence measure is a function of the estimated noise value that corresponds to the set of subcarriers that includes the subcarrier over which the data bit was received; and
    decoding the plurality of received data bits using the associated confidence measures to generate the decoded signal.

3.  The method as recited in Claim 2, wherein the confidence measure comprises a log-likelihood ratio that indicates a measure of certainty that the bit value estimated for the received data bit is an actual bit value of a corresponding transmitted data bit.

4.  The method as recited in Claim 3, wherein the log-likelihood ratio is estimated using an equation that is based on the modulation technique used.

5.  The method as recited in Claim 3, wherein the log-likelihood ratio is determined using the equation:

$$\Gamma_{Ib_o} = \begin{cases} \dfrac{4}{\sigma^2}(real(r)+1) & real(r) \le -2 \\[2mm] \dfrac{2*real(r)}{\sigma^2} & -2 < real(r) \le 2 \\[2mm] \dfrac{4}{\sigma^2}(real(r)-1) & real(r) > 2 \end{cases}$$

$$\Gamma_{Ib_1} = \begin{cases} -\dfrac{2}{\sigma^2}(real(r)+2) & real(r) < 0 \\[2mm] \dfrac{2}{\sigma^2}(real(r)-2) & real(r) \ge 0 \end{cases}$$

$$\Gamma_{Qb_0} = \begin{cases} \dfrac{4}{\sigma^2}(imag(r)+1) & imag(r) \le -2 \\[2mm] \dfrac{2*imag(r)}{\sigma^2} & -2 < imag(r) \le 2 \\[2mm] \dfrac{4}{\sigma^2}(imag(r)-1) & imag(r) > 2 \end{cases}$$

$$\Gamma_{Qb_1} = \begin{cases} -\dfrac{2}{\sigma^2}(imag(r)+2) & imag(r) < 0 \\[2mm] \dfrac{2}{\sigma^2}(imag(r)-2) & imag(r) \ge 0 \end{cases},$$

where $\Gamma$ is the log-likelihood ratio, $r$ is a received bit and $\sigma^2$ is an estimated noise value.

**6.** The method as recited in Claim 1, wherein each set of subcarriers comprises at least two subcarriers having adjacent frequencies.

**7.** The method as recited in Claim 1, wherein the noise value is estimated using the equation:

$$\sigma^2 = \alpha \frac{1}{N} \sum_{i=0}^{N-1} \left| v_i - p_i \hat{h}_i \right|^2$$, wherein $\sigma^2$ is the estimated noise value, $p_i$ is the magnitude of a transmitted pilot

symbol number $i$, $\hat{h}_i$ is a channel estimate at pilot symbol location $i$, $\alpha$ is a constant calculated from design parameters, and N is the total number of pilot symbols used.

**8.** The method as recited in Claim 1, wherein the modulation technique comprises at least one of Binary Phase-Shift Keying (BPSK), Quadrature Phase-Shift Keying (QPSK), Minimum-Shift Keying (MSK), Offset Quadrature Phase-Shift Keying (OQPSK), and Quadrature Amplitude Modulation (QAM).

**9.** A device in a multicarrier modulation (MCM) system comprising:

receiver apparatus (104) receiving an encoded signal over multiple subcarriers at different frequencies, the signal including a plurality of pilot symbols and data symbols modulated onto the subcarriers using a modulation technique; and **characterized by**

a processing device (214);

grouping the subcarriers into multiple sets of subcarriers based on their frequencies;

for each set, estimating a noise value associated with at least a portion of the pilot symbols received over subcarriers included in the set; and

generating, using the estimated noise values, a decoded signal comprising a plurality of decoded data bits.

10. The device as recited in Claim 9, wherein the decoded signal is generated using a Forward Error Correction (FEC) decoder that uses a log-likelihood ratio that is computed based on the estimated noise values to generate the decoded signal.

11. A computer-readable storage medium having computer-readable code stored thereon for programming a computer to perform a method upon an encoded signal received over multiple subcarriers at different frequencies, the signal including a plurality of pilot symbols and data symbols modulated onto the subcarriers using a modulation technique, the method being **characterized by** :

grouping (404) the subcarriers into multiple sets of subcarriers based on their frequencies;

for each set, estimating (406) a noise value associated with at least a portion of the pilot symbols received over subcarriers included in the set; and

generating (408), using the estimated noise values, a decoded signal comprising a plurality of decoded data bits.

**Patentansprüche**

1. Verfahren, welches die folgenden Schritte aufweist:

Empfang (402) eines codierten Signals über mehrere Unterträger bei unterschiedlichen Frequenzen, wobei das Signal eine Vielzahl von Pilotsymbolen und Datensymbolen einschließt, welche auf die Unterträger unter Verwendung eines Modulationsverfahrens aufmoduliert werden; und wobei das Verfahren durch die folgenden Schritte **gekennzeichnet** ist:

Gruppierung (404) der Unterträger in mehrere Gruppen von Unterträgern basierend auf ihren Frequenzen; für jede Gruppe Schätzung (406) eines Rauschwerts, welcher zumindest einem Teil der Pilotsymbole zugehörig ist, welche über in der Gruppe enthaltene Unterträger empfangen werden; und Erzeugung (408) eines decodierten Signals unter Verwendung der geschätzten Rauschwerte, wobei das decodierte Signal eine Vielzahl decodierter Datenbits aufweist.

2. Verfahren nach Anspruch 1, **dadurch gekennzeichnet, dass** die Erzeugung des decodierten Signals die folgenden Schritte aufweist:

Erzeugung aus den Datensymbolen einer Vielzahl empfangener Datenbits, und für jedes empfangene Datenbit Schätzung eines Bitwerts und Bestimmung eines dem geschätzten Bitwert zugehörigen Konfidenzmaßes, wobei das Konfidenzmaß eine Funktion des geschätzten Rauschwerts ist, welcher der Gruppe von Unterträgern entspricht, welche den Unterträger einschließt, über welchen das Datenbit empfangen worden ist; und Decodierung der Vielzahl von empfangenen Datenbits unter Verwendung der zugehörigen Konfidenzmaße zur Erzeugung des decodierten Signals.

3. Verfahren nach Anspruch 2, **dadurch gekennzeichnet, dass** das Konfidenzmaß eine Log-Likelihood-Ratio bzw. ein logarithmisches Wahrscheinlichkeitsverhältnis aufweist, welches ein Maß für die Sicherheit anzeigt, dass der für das empfangene Datenbit geschätzte Bitwert ein tatsächlicher Bitwert eines entsprechenden gesendeten Datenbits ist.

4. Verfahren nach Anspruch 3, **dadurch gekennzeichnet, dass** die Log-Likelihood-Ratio unter Verwendung einer Gleichung geschätzt wird, welche auf der verwendeten Modulationstechnik basiert.

5. Verfahren nach Anspruch 3, **dadurch gekennzeichnet, dass** die Log-Likelihood-Ratio unter Verwendung folgender Gleichung bestimmt wird:

$$\Gamma_{Ib_0} = \begin{cases} \dfrac{4}{\sigma^2}(real(r)+1) & real(r) \le -2 \\[2mm] \dfrac{2*real(r)}{\sigma^2} & -2 < real(r) \le 2 \\[2mm] \dfrac{4}{\sigma^2}(real(r)-1) & real(r) > 2 \end{cases}$$

$$\Gamma_{Ib_1} = \begin{cases} -\dfrac{2}{\sigma^2}(real(r)+2) & real(r) < 0 \\[2mm] \dfrac{2}{\sigma^2}(real(r)-2) & real(r) \ge 0 \end{cases}$$

$$\Gamma_{Qb_0} = \begin{cases} \dfrac{4}{\sigma^2}(imag(r)+1) & imag(r) \le -2 \\[2mm] \dfrac{2*imag(r)}{\sigma^2} & -2 < imag(r) \le 2 \\[2mm] \dfrac{4}{\sigma^2}(imag(r)-1) & imag(r) > 2 \end{cases}$$

$$\Gamma_{Qb_1} = \begin{cases} -\dfrac{2}{\sigma^2}(imag(r)+2) & imag(r) < 0 \\[2mm] \dfrac{2}{\sigma^2}(imag(r)-2) & imag(r) \ge 0 \end{cases},$$

wobei r die Log-Likelihood-Ratio ist, r ein empfangenes Bit ist und $\sigma^2$ ein geschätzter Rauschwert ist.

6. Verfahren nach Anspruch 1, **dadurch gekennzeichnet, dass** jede Gruppe von Unterträgern mindestens zwei Unterträger mit benachbarten Frequenzen aufweist.

7. Verfahren nach Anspruch 1, **dadurch gekennzeichnet, dass** der Rauschwert unter Verwendung folgender Gleichung geschätzt wird:

$$\sigma^2 = \alpha \frac{1}{N}\sum_{i=0}^{N-1}\left|v_i - p_i \hat{h}_i\right|^2$$

wobei $\sigma^2$ der geschätzte Rauschwert ist, $p_i$ die Größe der übertragenen PilotsymbolZahl i ist, $\hat{h}_i$ ein Kanalschätzwert an dem Pilotsymbol-Ort i ist, $\alpha$ eine Konstante ist, welche aus Entwurfsparametern berechnet wird, und N die Gesamtanzahl verwendeter Pilotsymbole ist.

8. Verfahren nach Anspruch 1, **dadurch gekennzeichnet, dass** das Modulationsverfahren mindestens eines der folgenden Verfahren aufweist: Binär-Phasenumtastung (BPSK), Quadratur-Phasenumtastung (QPSK), Minimalumtastung (MSK), verschobene quaternäre Phasenumtastung (OQPSK), und Quadratur-Amplitudenmodulation (QAM).

9. Vorrichtung in einem Mehrträgermodulations(MCM)-System, welche Folgendes aufweist:

ein Empfängergerät (104), welches ein codiertes Signal über mehrere Unterträger bei unterschiedlichen Frequenzen empfängt, wobei das Signal eine Vielzahl von Pilotsymbolen und Datensymbolen einschließt, welche auf die Unterträger unter Verwendung eines Modulationsverfahrens aufmoduliert werden; und wobei die Vorrichtung durch eine Verarbeitungsvorrichtung (214) **gekennzeichnet** ist:

Gruppierung der Unterträger in mehrere Gruppen von Unterträgern basierend auf ihren Frequenzen;
für jede Gruppe Schätzung eines Rauschwerts, welcher zumindest einem Teil der Pilotsymbole zugehörig ist, welche über in der Gruppe enthaltene Unterträger empfangen werden; und
Erzeugung eines decodierten Signals unter Verwendung des geschätzten Rauschwerts, wobei das decodierte Signal eine Vielzahl decodierter Datenbits aufweist.

10. Vorrichtung nach Anspruch 9, **dadurch gekennzeichnet, dass** das decodierte Signal unter Verwendung eines Vorwärtsfehlerkorrektur(FEC)-Decoders erzeugt wird, welcher das logarithmische Wahrscheinlichkeitsverhältnis bzw. Log-Likelihood-Ratio verwendet, welches basierend auf den geschätzten Rauschwerten zur Erzeugung des decodierten Signals berechnet wird.

11. Computerlesbares Speichermedium, auf welchem ein computer-lesbarer Code gespeichert ist, um einen Computer zur Ausführung eines Verfahrens nach Erhalt eines codierten Signals über mehrere Unterträger bei unterschiedlichen Frequenzen zu programmieren, wobei das Signal eine Vielzahl von Pilotsymbolen und Datensymbolen aufweist, welche auf die Unterträger unter Verwendung eines Modulationsverfahrens aufmoduliert werden, wobei das Verfahren durch die folgenden Schritte **gekennzeichnet** ist:

Gruppierung (402) der Unterträger in mehrere Gruppen von Unterträgern basierend auf ihren Frequenzen;
für jede Gruppe Schätzung (406) eines Rauschwerts, welcher zumindest einem Teil der Pilotsymbole zugehörig ist, welche über in der Gruppe enthaltene Unterträger empfangen werden; und
Erzeugung (408) eines decodierten Signals unter Verwendung der geschätzten Rauschwerte, wobei das decodierte Signal eine Vielzahl decodierter Datenbits aufweist.

## Revendications

1. Procédé comprenant:

la réception (402) d'un signal codé sur des sous-porteuses multiples à différentes fréquences,
le signal comprenant une pluralité de symboles pilotes et de symboles de données modulés sur les sous-porteuses en utilisant une technique de modulation;
et **caractérisé par**
le groupage (404) des sous-porteuses en de multiples ensembles de sous-porteuses sur la base de leurs fréquences;
pour chaque ensemble, l'estimation (406) d'une valeur de bruit associée à au moins une partie des symboles pilotes reçus sur des sous-porteuses incluses dans l'ensemble; et
la génération (408), en utilisant les valeurs de bruit estimées, d'un signal décodé comprenant une pluralité de bits de données décodés.

2. Procédé tel que défini dans la revendication 1, dans lequel la génération du signal décodé comprend:

la génération à partir des symboles de données d'une pluralité de bits de données reçus et pour chaque bit de données reçu l'estimation d'une valeur binaire et la détermination d'une mesure de confiance associée à la valeur binaire estimée, où la mesure de confiance est une fonction de la valeur de bruit estimée qui correspond à l'ensemble de sous-porteuses qui comprend la sous-porteuse sur laquelle le bit de données est reçu; et
le décodage de la pluralité de bits de données reçus en utilisant les mesures de confiance associées pour générer le signal décodé.

3. Procédé selon la revendication 2, dans lequel la mesure de confiance comprend un logarithme du rapport de vraisemblance qui indique une mesure de certitude que la valeur binaire estimée pour le bit de données reçu est une valeur binaire réelle d'un bit de données transmis correspondant.

4. Procédé tel que défini dans la revendication 3, dans lequel le logarithme du rapport de vraisemblance est estimé en utilisant une équation qui est basée sur la technique de modulation utilisée.

5. Procédé tel que défini dans la revendication 3, dans lequel le logarithme du rapport de vraisemblance est déterminé en utilisant l'équation:

$$\Gamma_{Ib_o} = \begin{cases} \dfrac{4}{\sigma^2}(real(r)+1) & real(r) \leq -2 \\ \dfrac{2*real(r)}{\sigma^2} & -2 < real(r) \leq 2 \\ \dfrac{4}{\sigma^2}(real(r)-1) & real(r) > 2 \end{cases}$$

$$\Gamma_{Ib_1} = \begin{cases} -\dfrac{2}{\sigma^2}(real(r)+2) & real(r) < 0 \\ \dfrac{2}{\sigma^2}(real(r)-2) & real(r) \geq 0 \end{cases}$$

$$\Gamma_{Qb_0} = \begin{cases} \dfrac{4}{\sigma^2}(imag(r)+1) & imag(r) \leq -2 \\ \dfrac{2*imag(r)}{\sigma^2} & -2 < imag(r) \leq 2 \\ \dfrac{4}{\sigma^2}(imag(r)-1) & imag(r) > 2 \end{cases}$$

$$\Gamma_{Qb_1} = \begin{cases} -\dfrac{2}{\sigma^2}(imag(r)+2) & imag(r) < 0 \\ \dfrac{2}{\sigma^2}(imag(r)-2) & imag(r) \geq 0 \end{cases},$$

où r est le logarithme du rapport de vraisemblance, $r$ est un bit reçu et $\sigma^2$ est une valeur de bruit estimé.

6. Procédé tel que défini dans la revendication 1, dans lequel chaque ensemble de sous-porteuses comprend au moins deux sous-porteuses ayant des fréquences adjacentes.

7. Procédé tel que défini dans la revendication 1, dans lequel la valeur de bruit est estimée en utilisant

l'équation: $\sigma^2 = \alpha \dfrac{1}{N} \displaystyle\sum_{i=0}^{N-1} \left| v_i - p_i \hat{h}_i \right|^2$, dans laquelle $\sigma^2$ est la valeur de bruit estimée, $p_i$ est l'amplitude

d'un nombre de symboles pilotes transmis $i$, $\hat{h}_i$ est une estimation de canal à l'emplacement de symbole pilote $i$, $\alpha$ est une constante calculée à partir de paramètres de conception, et N est le nombre total de symboles pilotes utilisés.

8. Procédé tel que défini dans la revendication 1, dans lequel la technique de modulation comprend au moins l'un parmi la modulation par déplacement binaire de phase (BPSK), modulation par déplacement de phase quadrivalente (QPSK), modulation à déplacement minimal (MSK), modulation par déplacement de phase quadrivalente décalée (OPQSK), et modulation d'amplitude de quadrature (QAM).

9. Dispositif dans un système de modulation multiporteuse (MCM) comprenant:

un appareil récepteur (104) recevant un signal codé sur des sous-porteuses multiples à différentes fréquences, le signal comprenant une pluralité de symboles pilotes et symboles de données modulés sur les sous-porteuses en utilisant une technique de modulation; et **caractérisé par**
un dispositif de traitement (214);
groupant les sous-porteuses en ensembles multiple de sous-porteuses basés sur leurs fréquences;
pour chaque ensemble, l'estimation d'une valeur de bruit associée à au moins une partie des symboles pilotes reçus sur les sous-porteuses comprises dans l'ensemble; et
générant, en utilisant les valeurs de bruit estimées, un signal décodé comprenant une pluralité de bits de données décodées.

10. Dispositif tel que défini dans la revendication 9, dans lequel le signal décodé est généré en utilisant un décodeur de correction d'erreur sans circuit de retour (FEC) qui utilise un logarithme du rapport de vraisemblance qui est calculé sur la base des valeurs de bruit estimées pour générer le signal décodé.

11. Support de stockage lisible par ordinateur ayant un code lisible par ordinateur stocké sur celui-ci pour programmation d'un ordinateur pour exécuter un procédé sur un signal codé reçu sur des sous-porteuses multiples à différentes fréquences, le signal comprenant une pluralité de symboles pilotes et symboles de données modulés sur les sous-porteuses en utilisant une technique de modulation, le procédé étant **caractérisé par**:

le groupage (404) des sous-porteuses en ensembles multiples de sous-porteuses sur la base de leurs fréquences:

pour chaque ensemble (406), l'estimation d'une valeur de bruit associée à au moins une partie des symboles pilotes reçus sur les sous-porteuses comprises dans l'ensemble; et
la génération (408), en utilisant les valeurs de bruit estimées, un signal décodé comprenant une pluralité de bits de données décodés.

FIG. 1

EP 2 140 642 B1

*FIG. 2*

100

MCM SYMBOL NUMBER

SUBCARRIER FREQUENCY

140

-PRIOR ART-

FIG. 3

START

RECEIVE AN ENCODED SIGNAL
OVER MULTIPLE SUBCARRIERS AT
DIFFERENT FREQUENCIES — 402

GROUP THE SUBCARRIERS INTO
MULTIPLE SETS OF SUBCARRIERS
BASED ON THEIR FREQUENCIES — 404

FOR EACH SET, ESTIMATE A NOISE
VALUE ASSOCIATED WITH AT LEAST A
PORTION OF THE PILOT SYMBOLS RECEIVED
OVER SUBCARRIERS INCLUDED IN THE SET — 406

GENERATE, USING THE ESTIMATED NOISE
VALUES, A DECODED SIGNAL COMPRISING
A PLURALITY OF DECODED BITS — 408

STOP

*FIG. 4*

**FIG. 5**

Diagram label 214. Blocks: RAW PILOTS/SYNCS, SLOT DEFORMATTER, RAW DATA (502); PILOT INTERPOLATION (504); NOISE ESTIMATOR (508); PILOT INTERPOLATION (506); SYMBOL DETECTOR (507); LLR CALCULATOR (510); FEC DECODER (512). Inputs 206, 208, 210, 212. Signals $v_i$, $d_i$, $\hat{h}_{vi}$, $\sigma^2$, $\hat{h}_{di}$, $\hat{r}$, $\Gamma$. Output SERIAL RECEIVED DATA. SYMBOL DEMODULATOR.

FIG. 6

240

MCM SYMBOL NUMBER

SUBCARRIER FREQUENCY

$\sigma_1^2$ ⌈ 302
304
306
308
$\sigma_2^2$ 310
312
314
316
318
320
322
324
326
328
330
$\sigma_3^2$ ⌊ 332

644          646          650

EP 2 140 642 B1

23

**EP 2 140 642 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050278609 A